Europäisches Patentamt

European Patent Office

Office européen des brevets

(19)

(11) Numéro de publication: **0 091 418**
**A2**

(12) # DEMANDE DE BREVET EUROPEEN

(21) Numéro de dépôt: **83870035.9**

(22) Date de dépôt: **30.03.83**

(51) Int. Cl.³: **B 29 H 21/00**

(30) Priorité: **01.04.82 BE 207733**

(43) Date de publication de la demande:
**12.10.83 Bulletin 83/41**

(84) Etats contractants désignés:
**AT BE CH DE FR GB IT LI LU NL SE**

(71) Demandeur: **Reynders, Gilbert Léon**
**41, rue du Bois du Bosquet**
**B-1330 Rixensart(BE)**

(72) Inventeur: **Reynders, Gilbert Léon**
**41, rue du Bois du Bosquet**
**B-1330 Rixensart(BE)**

(74) Mandataire: **Vigneron, Jean**
**Cabinet VIGNERON 30 avenue Eugène Godaux**
**B-1150 Bruxelles(BE)**

(54) **Procédé pour améliorer l'adhérence de pneumatiques et appareil pour la mise en oeuvre de ce procédé.**

(57) Procédé pour améliorer le coefficient d'adhérence de pneumatiques, neufs ou usagés, qui consiste à enfoncer temporairement dans la bande de roulement (2), sensiblement radialement, des organes (3) pour réaliser des trous dont l'ouverture a une section telle qu'elle s'ouvre dans les zones sollicitées du pneumatique et se referme dans les zones non sollicitées, appareil pour la mise en oeuvre de ce procédé et pneumatique obtenu.

FIG. 7

EP 0 091 418 A2

"Procédé pour améliorer l'adhérence de pneumatiques et appareil pour la mise en oeuvre de ce procédé"

La présente invention a pour objet un procédé pour améliorer le coefficient d'adhérence de pneumatiques, neufs ou usagés, dont la bande de roulement soit porte une sculpture, soit est lisse.

On a déjà pensé, pour améliorer le coefficient d'adhérence de pneumatiques à bande de roulement portant une sculpture, à pratiquer des stries transversales dans ladite bande de roulement. Cette façon de procéder présente l'inconvénient, d'une part, d'affaiblir la gomme à cause du quadrillage avec la sculpture et les rainures d'élimination d'eau et de provoquer l'arrachement de cette gomme et, d'autre part, d'être totalement inefficace en cas de sollicitation transversale du pneumatique, en d'autres termes, le striage des pneumatiques ne peut être efficace que lorsque le pneumatique suit une trajectoire rectiligne.

On a également pensé à réaliser, dans des pneumatiques à bande de roulement portant une sculpture, des stries suivant des cercles concentriques. Ces stries qui communiquent avec la sculpture et les rainures d'élimination d'eau, présentent également l'inconvénient d'affaiblir la gomme et de provoquer son arrachement tout comme l'inconvénient de n'améliorer l'adhérence que dans des proportions négligeables.

L'invention a pour but de remédier à ces inconvénients et de procurer un procédé permettant d'améliorer de manière sensible le coefficient d'adhérence des pneumatiques à sculpture ou lisses sans réduire la résistance de la gomme constituant la bande de roulement et sans provoquer l'arrachement de ladite gomme, l'accroissement d'adhérence restant constant quelles que soient les sollicitations longitudinales ou transversales subies par les pneumatiques.

A cet effet, suivant l'invention, ledit procédé consiste à enfoncer temporairement dans la bande de roulement, sensiblement radialement, des organes pour réaliser des trous dont l'ouverture a une section telle qu'elle s'ouvre dans l'aire de contact de la bande de roulement avec le sol et dans la zone du pneumatique où les éléments de la bande de roulement sont tendus lors du mouvement et qu'elle se referme dans la zone où lesdits éléments sont au repos et/ou comprimés lors du mouvement, la profondeur des trous étant inférieure à la distance séparant la bande de roulement du pneumatique des nappes protectrices de ce dernier.

Suivant l'invention, les organes sont avantageusement constitués par des pointes coniques, le sommet du cône étant dirigé vers l'axe du pneumatique, les pointes étant enfoncées suivant des génératrices de la bande de roulement du pneumatique de manière à ce que les trous réalisés soient régulièrement répartis le long desdites génératrices, ces dernières étant également régulièrement réparties sur le pourtour de la bande de roulement.

Suivant l'invention, les organes sont avantageusement enfoncés dans la bande de roulement du pneumatique, à température ambiante et à l'état mouillé, le liquide utilisé étant, par exemple, de l'eau.

L'invention a également pour objet un appareil pour la mise en oeuvre du procédé susdit.

Suivant l'invention, cet appareil comprend au moins un cylindre droit pouvant tourner autour de son axe et suivant les génératrices duquel sont montés les organes susdits, tels que pointes coniques, des moyens de support du pneumatique agencés pour que celui-ci puisse tourner autour d'un axe sensiblement parallèle à l'axe du cylindre, des moyens agencés pour mettre en contact la bande de roulement du pneumatique avec les organes et pour exercer une pression dirigée de manière à assurer la pénétration des organes dans la bande de roulement et des moyens agencés pour entraîner au moins le pneumatique ou le cylindre en rotation autour de son axe.

L'invention a encore pour objet un pneumatique dont le coefficient d'adhérence a été augmenté par le procédé précité, à l'aide de l'appareil susdit.

D'autres détails et particularités de l'invention ressortiront de la description des dessins annexés qui illustrent le procédé susdit et qui représentent, à titre d'exemple non limitatif, des formes de réalisation particulières de l'appareil suivant l'invention.

La figure 1 est une vue schématique, en élévation et en coupe, d'un pneumatique, suivant l'invention, supportant un véhicule et soit n'étant pas soumis à une sollicitation, soit soumis à une sollicitation longitudinale.

La figure 2 est une vue de dessous correspondant à la figure 1 et montrant l'aire de contact du pneumatique avec le sol.

La figure 3 est une vue analogue à la figure 1, le pneumatique étant soumis à une solliciation transversale.

La figure 4 est une vue de dessous correspondant à la figure 3.

La figure 5 est une vue en élévation d'un appareil suivant l'invention.

La figure 6 est une vue, avec brisure partielle, dudit appareil suivant les flèches VI-VI de la figure 5.

La figure 7 est une vue en élévation, avec brisures partielles, d'une variante de l'appareil illustré aux figures 5 et 6.

La figure 8 est une vue schématique suivant les flèches VIII-VIII de la figure 7.

La figure 9 est une vue en coupe suivant la ligne IX-IX de la figure 6 et à plus grande échelle que celle de cette dernière.

La figure 10 est une vue, analogue à la figure 9, d'une variante de l'organe montré à cette figure 9.

La figure 11 est une vue en coupe suivant la ligne XI-XI de la figure 10.

Dans les différentes figures, les mêmes notations de référence désignent des éléments identiques ou analogues.

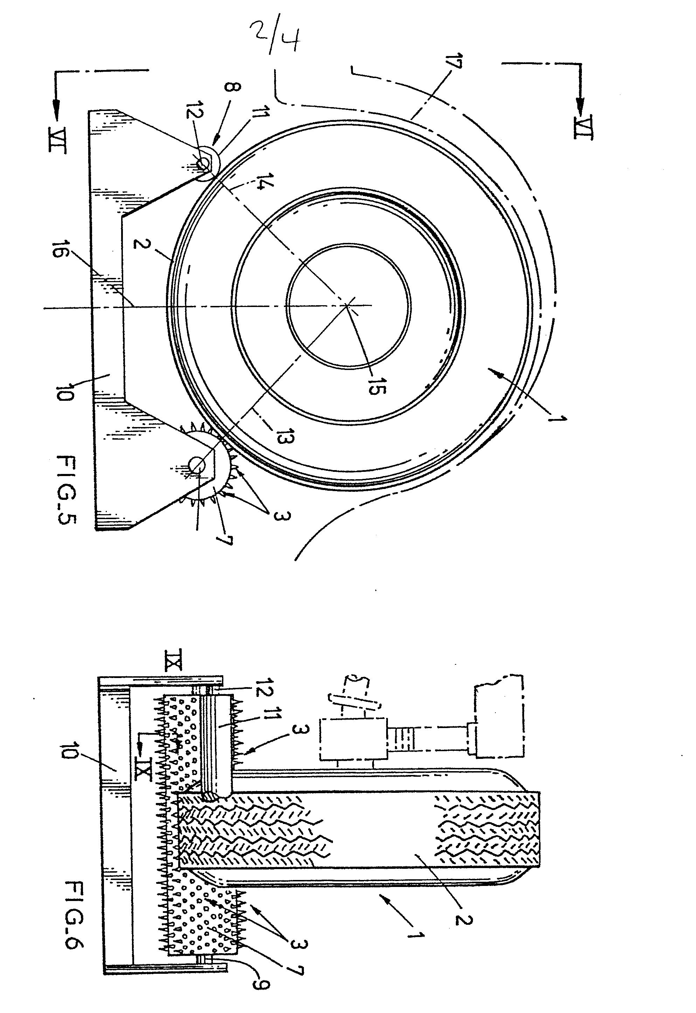

Le procédé, suivant l'invention et illustré aux dessins, est destiné à améliorer le coefficient d'adhérence de pneumatiques neufs ou usagés et consiste à enfoncer temporairement dans la bande de roulement 2 du pneumatique 1, sensiblement radialement, des organes 3 pour réaliser des trous 4 dont l'ouverture 5 a une section telle qu'elle s'ouvre dans l'aire de contact 6 (voir figures 2 et 4) de la bande de roulement avec le sol, l'ouverture desdits trous permettant d'accroître les efforts élastiques pouvant être communiqués à la bande de roulement à l'endroit de l'aire de contact susdite et diminuant d'autant les risques de glissement du pneumatique sur le sol. La section de l'ouverture 5 est telle que cette dernière se ferme, lorsque le pneumatique est au repos, en dehors de l'aire de contact 6. Quand le pneumatique est en mouvement, ladite ouverture reste ouverte également dans la zone de pneumatique où les éléments de la bande de roulement sont tendus (partie arrière du pneumatique en considérant son sens d'avancement), cette ouverture se fermant, d'une part, dans la partie du pneumatique diamétralement opposée à l'aire de contact 5 où les éléments susdits sont au repos et, d'autre part, dans la zone du pneumatique où lesdits éléments sont comprimés (partie avant du pneumatique en considérant son sens d'avancement).

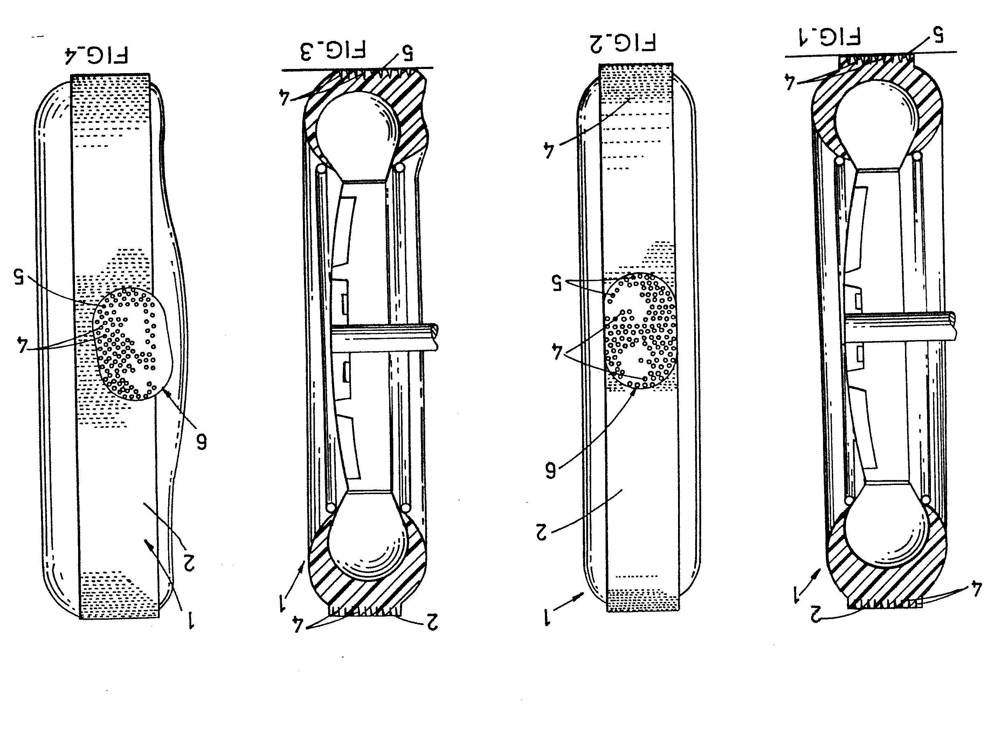

Les organes utilisés sont de préférence des pointes coniques 3, comme représenté aux figures 1 à 9, et ont une longueur telle que la profondeur des trous réalisés dans la bande de roulement est inférieure à la distance séparant cette dernière des nappes protectrices du pneumatique. Lesdites pointes 3 sont enfoncées soit à sec et à température ambiante, soit également à température ambiante, après que le pneumatique ait été mouillé à l'eau ou encore à sec mais en portant la bande de roulement à une température comprise entre 60 et 100° C.

Les pointes 3 sont enfoncées dans la bande de roulement suivant des génératrices de cette dernière de manière à ce que les trous réalisés soient régulièrement répartis le long desdites génératrices, ces dernières étant également régulièrement réparties sur le pourtour de la bande de roulement. La distance séparant les axes des trous 4 répartis suivant les génératrices est le l'ordre de 5 mm, tandis que la distance qui sépare les génératrices suivant lesquelles les trous sont réalisés est également de l'ordre de 5 mm, lesdits trous étant avantageusement disposés en quinconce. On a obtenu de bons résultats en utilisant des pointes ayant une base dont le diamètre est de l'ordre de 1 mm et une longueur utile de l'ordre de 5 mm.

L'appareil suivant l'invention et pour la mise en oeuvre du procédé précité comprend un cylindre droit 7 pouvant tourner autour de son axe et suivant les génératrices duquel sont montés les organes, tels que pointes coniques 3, des moyens 8 de support du pneumatique agencés pour que celui-ci puisse tourner autour d'un axe parallèle à l'axe du cylindre, des moyens agencés pour mettre la bande de roulement 2 du pneumatique en contact avec les pointes 3 et pour exercer une pression sur ces dernières afin d'assurer leur pénétration dans la bande de roulement 2 et des moyens agencés pour entraîner au moins le pneumatique 1 ou le cylindre 7 en rotation autour de son axe.

Dans la forme de réalisation de l'appareil montrée aux figures 5 et 6, le cylindre 7 pourvu des pointes 3 est calé sur un arbre 9 monté dans un bâti 10 pourvu de paliers, non représentés, disposés pour supporter cet arbre 9 de telle sorte que son axe soit sensiblement horizontal. Les moyens 8 susdits sont constitués par un second cylindre lisse 11, coaxial au cylindre 7, dont l'arbre 12 est agencé dans le bâti 10 pour que le cylindre 11 tourne librement autour de son axe. Pour assurer une bonne position du pneumatique dans l'appareil, c'est-à-dire pour que le pneumatique soit bien guidé pour tourner autour d'un axe parallèle aux axes des arbres 9 et 12, les positions de ces derniers axes sont telles que les plans, de traces 13 et 14, passant par l'axe de chacun des cylindres 7 et 11 et l'axe 15 du pneumatique reposant sur lesdits cylindres 7 et 11 forment des angles sensiblement égaux avec le plan vertical, de trace 16, passant par l'axe 15 du pneumatique. Le pneumatique 1 est monté sur un véhicule17 dont le poids exerce la pression nécessaire pour assurer la pénétration des pointes 3 dans la bande de roulement 2. L'arbre 9 du cylindre 7 peut tourner librement autour de son axe. Dans ce cas, il faudra prévoir des moyens, tels qu'un galet presseur entraîné en rotation, pour faire tourner le pneumatique autour de son axe pour qu'il entraîne en rotation les cylindres 7 et 11. Suivant l'invention, on peut également prévoir un moteur réducteur, non représenté, agencé sur l'arbre 9 du cylindre 7. Dans ce cas, le pneumatique 1 ainsi que le cylindre 11 sont entraînés en rotation à partir dudit cylindre 7.

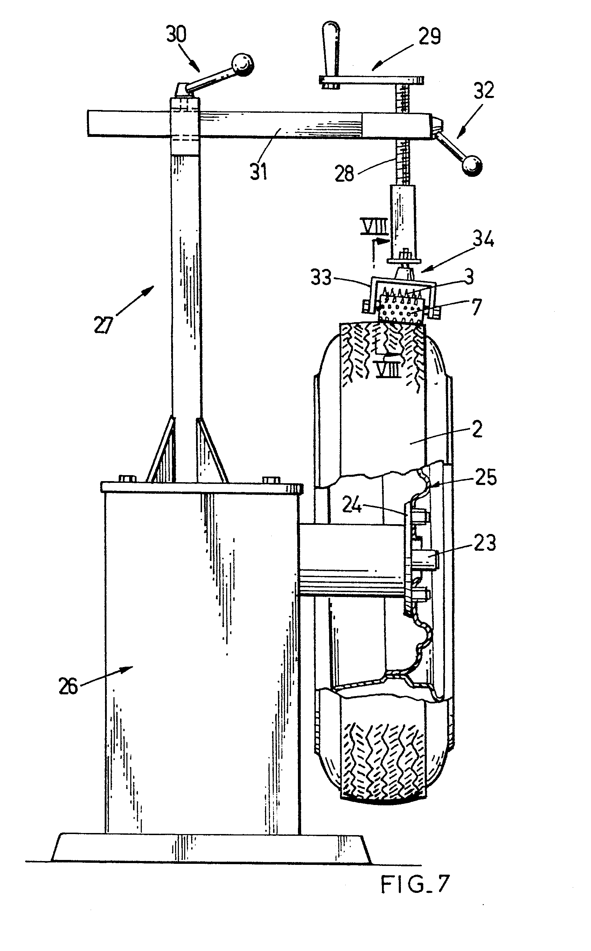

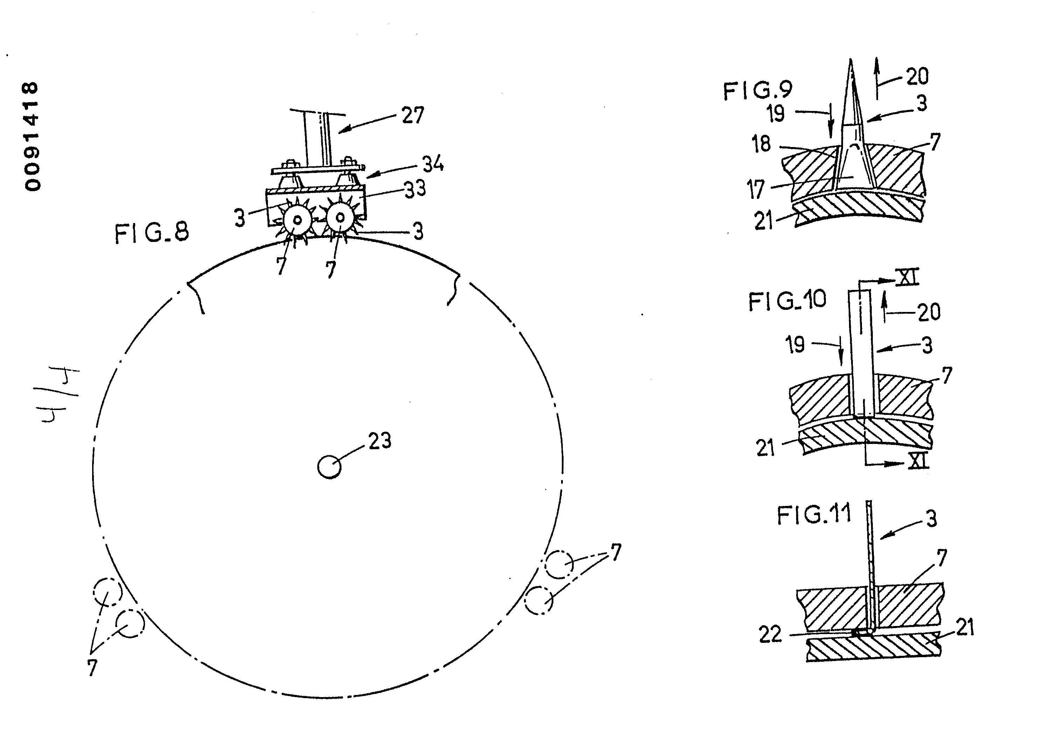

Dans la forme de réalisation de l'appareil illustrée aux figures 7 et 8, celui-ci comprend un arbre 23 pourvu d'un plateau 24 agencé pour permettre la fixation d'une jante 25, coaxiale à cet arbre 23, sur laquelle est monté le pneumatique, un support 26 pour l'arbre 23 qui est horizontal et un moteur, non représenté, pour l'entraîner en rotation autour de son axe. L'agencement de ces éléments est analogue à ceux utilisés dans les dispositifs pour l'équilibrage des roues. Cet appareil comprend deux cylindres 7, pourvus des pointes 3, disposés côte à côte pour que leurs axes soient sensiblement parallèles à l'axe de l'arbre 23. Ces cylindres 7 sont supportés par une potence 27 fixée au support 26 et constituée d'éléments agencés pour permettre le réglage de la position des cylindres 7 suivant une direction parallèle à l'axe de l'arbre 23. Cette potence présente des moyens, tels que vis 28 et manivelle de commande 29, agencés pour régler la position des cylindres 7 suivant une direction perpendiculaire à l'axe de l'arbre 23 et pour exercer une pression sur ces cylindres afin de faire pénétrer les pointes 3 dans la bande de roulement 2 du pneumatique. La potence 27 comprend également des moyens 30 pour bloquer l'élément coulissant 31 en position choisie et des moyens 32 pour bloquer la vis 28 lorsque les pointes 3 des cylindres 7 ont pénétré de la distance voulue dans la bande de roulement du pneumatique.

Comme les bandes de roulement des pneumatiques ne sont pas planes, on utilise, comme montré à la figure 7, des cylindres 7 dont la longueur est inférieure à la largeur desdites bandes de roulement et on réalise les trous par phases successives à partir d'un des bords de la bande de roulement. Pour que les trous aient la même profondeur sur toute la largeur de la bande de roulement 2, les cylindres 7 sont montés dans un étrier 33 réuni à la potence 27 par un système à rotule 34 agencé pour que les axes des cylindres 7 puissent prendre une position légèrement oblique par rapport à l'axe de l'arbre 23 afin d'épouser parfaitement le contour de la bande de roulement du pneumatique à traiter.

Pour accélérer la cadence de traitement des pneumatiques, un même support 26 peut être équipé de plusieurs potences supportant chacune un ou plusieurs cylindres 7. Comme montré schématiquement à la figure 8, l'appareil susdit peut être équipé de trois potences décalées de 120 degrés par rapport à l'axe de l'arbre 23, chacune de ces potences portant une paire de cylindres 7, chacune des paires de cylindres étant décalées, en réglant la position des éléments coulissants 31 des potences, suivant une direction parallèle à l'axe de l'arbre 23 pour que toute la surface de la bande de roulement soit traitée en une seule opération.

Pour permettre le remplacement des pointes 3 ou l'échange de pointes d'une longueur par des pointes d'une longueur différente, ces pointes sont montées sur le cylindre 7 de manière amovible. Comme montré à la figure 9, le cylindre 7 est creux et est perforé pour recevoir l'extrémité 17 des pointes. Les perforations 18 du cylindre s'évasent vers l'intérieur de ce dernier et l'extrémité des pointes 3 coopérant avec ces perforations présentent le même évasement de manière à ce que les pointes disposées dans les perforations soient mobiles suivant la flèche 19 et immobiles suivant la flèche 20. Les pointes sont maintenues en place dans les perforations 18 par un cylindre 21 se glissant à l'intérieur du cylindre creux 7 et dont le diamètre extérieur est légèrement inférieur au diamètre interne dudit cylindre 7.

Il doit être entendu que l'invention n'est nullement limitée aux formes de réalisation décrites et que bien des modifications peuvent être apportées à ces dernières sans sortir du cadre du présent brevet.

C'est ainsi que l'on pourrait prévoir un appareil dont le ou les éléments coulissants 31 de la ou des potences 27 sont associés à un moyen de commande automatique assurant le déplacement régulier du ou des cylindres 7 suivant l'axe de l'arbre 23, en synchronisme avec le mouvement de rotation de l'arbre 23.

C'est ainsi que l'on pourrait également prévoir, comme montré aux figures 10 et 11, des organes 3 en forme de lame. Ces lames réparties comme les pointes susdites, ont avantageusement une longueur utile de l'ordre de 5 mm, une largeur comprise entre 1 et 3 mm et une épaisseur de l'ordre de 0,5 à 1 mm. Ces lames sont avantageusement montées sur le cylindre creux 7 de manière amovible et immobilisées sur ce dernier, grâce à leur base recourbée 22, par un cylindre 21 se glissant à l'intérieur du cylindre creux 7.

## REVENDICATIONS

1. Procédé pour améliorer le coefficient d'adhérence de pneumatiques (1) neufs ou usagés, caractérisé en ce qu'il consiste à enfoncer temporairement dans la bande de roulement (2), sensiblement radialement, des organes (3) pour réaliser des trous (4) dont l'ouverture (5) a une section telle qu'elle s'ouvre dans l'aire de contact (6) de la bande de roulement avec le sol et dans la zone du pneumatique où les éléments de la bande de roulement sont tendus lors du mouvement et qu'elle se referme dans la zone où lesdits éléments sont au repos et/ou comprimés lors du mouvement, la profondeur des trous (4) étant inférieure à la distance séparant la bande de roulement (2) du pneumatique (1) des nappes protectrices de ce dernier.

2. Procédé suivant la revendication 1, caractérisé en ce que les organes (3) sont constitués par des pointes coniques, le sommet du cône étant dirigé vers l'axe du pneumatique.

3. Procédé suivant l'une ou l'autre des revendications 1 et 2, caractérisé en ce que les organes (3) sont enfoncés dans la bande de roulement (2) du pneumatique à sec et à température ambiante.

4. Procédé suivant l'une ou l'autre des revendications 1 et 2, caractérisé en ce que les organes (3) sont enfoncés dans la bande de roulement (2) du pneumatique, à température ambiante et à l'état mouillé, le liquide utilisé étant, par exemple, de l'eau.

5. Procédé suivant l'une ou l'autre des revendications 1 et 2, caractérisé en ce qu'on chauffe la bande de roulement (2) du pneumatique avant d'y enfoncer les organes (3), ceux-ci étant enfoncés à sec à une température comprise entre 60° et 100° C.

6. Procédé suivant l'une quelconque des revendications 1 à 5, caractérisé en ce qu'on enfonce les organes (3) suivant des génératrices de la bande de roulement (2) du pneumatique de manière à ce que les trous (4) réalisés soient régulièrement répartis le long desdites génératrices, ces dernières étant également régulièrement réparties sur le pourtour de la bande de roulement (2).

7. Procédé suivant la revendication 6, caractérisé en ce que la distance séparant les trous (4) répartis suivant les génératrices est de l'ordre de 5 mm, la distance séparant les génératrices suivant lesquelles les trous sont réalisés est également de l'ordre de 5 mm.

8. Procédé suivant l'une quelconque des revendications 2 à 7, caractérisé en ce que les pointes (3) utilisées ont une base dont le diamètre est de l'ordre de 1 mm, la longueur des pointes étant de l'ordre de 5 mm.

9. Appareil pour la mise en oeuvre du procédé suivant l'une quelconque des revendications 1 à 8, caractérisé en ce qu'il comprend au moins un cylindre droit (7) pouvant tourner autour de son axe et suivant les génératrices duquel sont montés les organes (3), tels que pointes coniques, des moyens (8) de support du pneumatique (1) agencés pour que celui-ci puisse tourner autour d'un axe sensiblement parallèle à l'axe du cylindre (7), des moyens agencés pour mettre en contact la bande de roulement (2) du pneumatique avec les organes (3) et pour exercer une pression dirigée de manière à assurer la pénétration des organes (3) dans la bande de roulement (2) et des moyens agencés pour entraîner au moins le pneumatique (1) ou le cylindre (7) en rotation autour de son axe.

10. Appareil suivant la revendication 9, caractérisé en ce que le cylindre (7) présentant les organes (3), tels que pointes coniques, est calé sur un arbre (9) monté dans un bâti (10) pourvu de paliers disposés pour supporter cet arbre de manière à ce que son axe soit sensiblement horizontal, le bâti (10) supportant l'arbre (12) d'un second cylindre lisse (11) coaxial au cylindre (7) portant les pointes, tournant librement autour de son axe, les positions des axes des cylindres (7 et 11) étant telles que les plans passant par l'axe de chacun desdits cylindres et l'axe du pneumatique (1), dont la bande de roulement (2) repose sur les cylindres (7 et 11), forment des angles sensiblement égaux avec le plan vertical passant par l'axe du pneumatique, le pneumatique reposant sur les cylindres (7 et 11) étant monté sur un véhicule dont le poids exerce la pression susdite assurant la pénétration des pointes (3) dans la bande de roulement (2).

11. Appareil suivant l'une ou l'autre des revendications 9 et 10, caractérisé en ce qu'il comprend un moteur pour entraîner le cylindre (7), muni des pointes susdites, en rotation autour de son axe.

12. Appareil suivant la revendication 9, caractérisé en ce qu'il comprend un arbre (23) pourvu d'un plateau (24) agencé pour permettre la fixation d'une jante (25), coaxiale à l'arbre (23), sur laquelle est monté le pneumatique (1), un support (26) pour cet arbre (23) et un moteur pour entraîner ce dernier en rotation autour de son axe, le cylindre (7) muni des organes (3) étant supporté, pour que son axe soit sensiblement parallèle à l'axe de l'arbre (23), par une potence (27) fixée au support (26), cette potence étant constituée d'éléments agencés pour permettre le réglage de la position du cylindre (7) suivant une direction parallèle à l'axe de l'arbre (23) supportant le pneumatique, la potence (27) présentant des moyens (28), tels que vis, agencés pour régler la position du cylindre (7) suivant une direction perpendiculaire à l'axe de l'arbre (23) et pour exercer une pression sur ce cylindre (7) afin de faire pénétrer les organes (3) dans la bande de roulement (2) du pneumatique, des moyens (30) étant en outre prévus sur la potence (27) pour immobiliser les éléments qui la constituent dans leur position choisie et pour bloquer, en position choisie, les moyens (28) assurant la pénétration des organes (3) du cylindre (7) dans le pneumatique.

13. Appareil suivant la revendication 12, caractérisé en ce que la longueur du cylindre (7) est inférieure à la largeur de la bande de roulement (2) du pneumatique, ce cylindre (7) étant monté dans un étrier (33) réuni à la potence (27) par un système à rotule (34) agencé pour que l'axe du cylindre (7) puisse prendre une position oblique par rapport à l'axe de l'arbre (23) supportant le pneumatique.

14. Appareil suivant l'une ou l'autre des revendications 12 et 13, caractérisé en ce qu'il comprend au moins une seconde potence (27) fixée au support (26) et pourvue d'au moins un cylindre (7) muni des organes (3), ce cylindre (7), dont l'axe est sensiblement parallèle à l'axe de l'arbre (23) supportant le pneumatique, et le cylindre (7) porté par la potence précitée étant décalés angulairement par rapport à l'axe de l'arbre (23).

15. Appareil suivant l'une quelconque des revendications 9 à 14, caractérisé en ce que les organes (3), tels que pointes, sont montés sur le cylindre (7) de manière amovible.

16. Appareil suivant la revendication 15, caractérisé en ce que le cylindre (7) est creux et est perforé pour recevoir l'extrémité (17) des pointes (3) opposée à leur extrémité pénétrant dans la bande de roulement (2), les perforations (18) du cylindre s'évasant vers l'intérieur de ce dernier et l'extrémité des pointes (3) coopérant avec ces perforations présentant le même évasement de sorte que les pointes disposées dans lesdites perforations sont mobiles dans le sens intérieur du cylindre et immobiles dans le sens extérieur du cylindre, un cylindre (21), dont le diamètre extérieur est légèrement inférieur au diamètre interne du cylindre (7) présentant les perforations (18), étant prévu pour être introduit dans le cylindre creux (7) pour bloquer les pointes (3) dans les perforations (18).

17. Appareil suivant l'une quelconque des revendications 9 à 16, caractérisé en ce que les organes (3) sont disposés en quinconce sur le cylindre (7).

18. Pneumatique traité par le procédé suivant l'une quelconque des revendications 1 à 8 ou à l'aide de l'appareil suivant l'une quelconque des revendications 9 à 17.

FIG.1

FIG.2

FIG.3

FIG.4

FIG.5

FIG.6

FIG_7

0091418

FIG.8

FIG.9

FIG.10

FIG.11